# EUROPEAN PATENT APPLICATION

(11) **EP 0 969 217 A2**
(43) Date of publication of application: **05.01.2000**
(21) Application number: 99110518.0
(22) Date of filing: 01.06.1999
(51) Int. Cl.: F16C 33/20

(54) **Composite spherical bearing and method of producing same**

(30) Priority: 05.06.1998 US 92249
(71) Applicant: REXNORD CORPORATION, Milwaukee, WI 53214 (US)
(72) Inventor: Harris, bernard, 60062 Illinois (US); Bozych,Dennis E, 60515 Illinois (US); Scholbe,Jeffrey R, 60532 Illinois (US)
(74) Representative: Badger, John Raymond

(57) **Abstract**

A spherical bearing comprises a one-piece, laminated inner member (13) including a layer (17) of self-lubricating material having a truncated, outwardly convex spherical shape (19), and an inner resinous layer (21) bonded to and supporting said self-lubricating layer (17) of said inner member, and a one-piece, laminated outer member (23) including a layer (25) of self-lubricating material having a truncated, inwardly concave spherical shape and being movably engaged with said self-lubricating layer (17) of said inner member, and an outer resinous layer (29) bonded to and supporting said self-lubricating layer of said outer member.

A method of making a spherical bearing includes the steps of providing an inner supporting fiberglass epoxy resin matrix which includes an outer, outwardly convex, truncated spherical surface,placing a first fabric of self-lubricating material on the outer spherical surface of the inner supporting fiberglass epoxy resin matrix, forming on the first fabric a second layer of glass filaments and resin so as to conform the first fabric to the outer spherical surface of the inner supporting fiberglass epoxy resin matrix, curing the second layer to form an intermediate fiberglass epoxy resin matrix and to bond the first fabric to the inner supporting fiberglass epoxy resin matrix and to the intermediate fiberglass epoxy resin matrix, removing the intermediate fiberglass epoxy resin matrix to expose the first fabric, forming the first fabric with an outer, outwardly convex, spherical surface, whereby to form an inner laminated bearing member, placing a second fabric of self-lubricating material on the outer spherical surface of the first fabric, forming on the second fabric an outer supporting layer of glass filaments and resin so as to conform the second fabric to the outer spherical surface of the first fabric, and curing the outer supporting layer to form an outer supporting fiberglass epoxy resin matrix and to bond the second fabric to the outer supporting fiberglass epoxy resin matrix, whereby to form an outer laminated bearing member.

## Description

The invention relates generally, but not exclusively, to self-aligning and self-lubricating spherical bearings.

The invention relates also to bearings comprising one composite race or member including a bearing surface fabricated, at least in part, of self-lubricating material and a supporting portion fabricated from fibreglass filaments and resin.

References hereto to a surface of spherical shape are to be understood as relating to surfaces which have the shape of a part of a sphere.

Typically, in the past, fabric bearing surfaces woven of polytetrafluoroethylene (PTFE), or polyester or other bondable yarns were mated against hard metallic surfaces.

The invention provides a spherical bearing comprising a one-piece, laminated inner member including a layer which is fabricated of self-lubricating material and which includes an outer bearing surface of truncated, outwardly convex spherical shape, and an inner resinous layer bonded to and supporting the self-lubricating layer of the inner member, and a one-piece, laminated outer member including a layer which is fabricated of self-lubricating material, which includes an inner bearing surface of truncated, inwardly concave spherical shape, and which is movably engaged with the outer bearing surface of the self-lubricating layer of the inner member, and an outer resinous layer bonded to and supporting the self-lubricating layer of the outer member.

The invention also provides a spherical bearing comprising a one-piece, laminated inner member including an inner layer which is fabricated of self-lubricating material, an outer layer which is fabricated of self-lubricating material and which has an outer bearing surface of truncated, outwardly convex spherical shape, and an intermediate resinous layer bonded to and supporting said inner and outer layers of said inner member, and a one-piece, laminated outer member including an inner layer which is fabricated of self-lubricating material, which has an inner bearing surface of truncated, inwardly concave spherical shape, and which is movably engaged with said outer bearing surface of said outer layer of said inner member, and an outer supporting layer bonded to and supporting said inner layer of said outer member.

The invention also provides a spherical bearing comprising a one-piece, laminated inner member including an inner layer which is fabricated from a fabric of self-lubricating material and which defines a bore, an outer layer which is fabricated from a fabric including PTFE, polyester, or other bondable yarns and which has a truncated, outwardly convex spherical shape, and an intermediate resinous layer which is fabricated of glass filaments and resin and which is bonded to and supports the inner and outer layers, and a one-piece, laminated outer member including an inner layer which is fabricated from a fabric including PTFE, polyester, or other bondable yarns and which has a truncated, inwardly concave spherical shape and movably engages the outer layer of the inner member, and an outer supporting layer which is fabricated of glass filaments and resin, which is bonded to the inner layer of the outer member, and which has an outer cylindrical surface.

The invention also provides a method of making a spherical bearing comprising the steps of providing an inner supporting layer which is fabricated of fiberglass epoxy resin matrix and which includes an outer, outwardly convex, truncated spherical surface, placing a first fabric of self-lubricating material on the outer spherical surface of the inner supporting fiberglass epoxy resin matrix, applying on the first fabric a second layer of glass filaments and resin so as to conform the first fabric to the outer spherical surface of the inner supporting fiberglass epoxy resin matrix, curing the second layer to form an intermediate fiberglass epoxy resin matrix and to bond the first fabric to the inner supporting fiberglass epoxy resin matrix and to the intermediate fiberglass epoxy resin matrix, removing the intermediate fiberglass epoxy resin matrix to expose the first fabric, forming the first fabric with an outer, outwardly convex, spherical surface, whereby to form an inner laminated bearing member, placing a second fabric of self-lubricating material on the outer spherical surface of the first fabric, applying on the second fabric an outer layer of glass filaments and resin so as to conform the second fabric to the outer spherical surface of the first fabric, and curing the outer layer to form an outer supporting fiberglass epoxy resin matrix and to bond the second fabric to the outer supporting fiberglass epoxy resin matrix, whereby to form an outer laminated bearing member.

The invention also provides a method of making a spherical bearing comprising the steps of placing a first fabric of PTFE, polyester, or other bondable yarns on a cylindrical mandrel, applying on the first fabric a first supporting layer of glass filaments and resin, curing the resin of the first supporting layer to form an inner fiberglass epoxy resin matrix and to bond the first fabric to the inner fiberglass epoxy resin matrix, removing a portion of the first supporting layer to provide an outer, outwardly convex, truncated spherical surface, placing a second fabric of PTFE, polyester, or other bondable yarns on the outer, truncated spherical surface of the first supporting layer, applying on the second fabric a second layer of glass filaments and resin so as to conform the second fabric to the outer spherical surface of the first supporting layer, curing the resin of the second layer to form an intermediate fiberglass epoxy resin matrix and to bond the second fabric to the inner fiberglass epoxy resin matrix and to the intermediate fiberglass epoxy resin matrix, removing the intermediate fiberglass epoxy resin matrix to expose the second fabric, forming the second fabric with an outer, outwardly convex, truncated spherical surface, thereby to form an inner laminated member, applying a parting agent to the outer, truncated spherical surface of the second fabric, placing a third fabric of PTFE, polyester, or other bondable yarns over the parting agent and over the outer, truncated spherical surface of the second fabric, applying on the third fabric an outer layer of glass filaments and resin so as to conform the third fabric to the outer spherical surface of the second fabric, curing the resin of the outer layer to form an outer supporting fiberglass epoxy resin matrix and to bond the third fabric to the outer supporting fiberglass epoxy resin matrix, thereby to form an outer laminated member in encircling relation to the inner laminated member, and moving the outer member relative to the inner member.

The invention also provides a method of making a spherical bearing component comprising the steps of providing an inner supporting layer which is fabricated of fiberglass epoxy resin matrix and which includes an outer, outwardly convex, partially spherical surface, placing a fabric of self-lubricating material on the outer partially spherical surface of the inner supporting fiberglass epoxy resin matrix, applying on the fabric a second layer of glass filaments and resin so as to conform the fabric to the outer spherical surface of the inner supporting fiberglass epoxy resin matrix, curing the second layer to form an intermediate fiberglass epoxy resin matrix and to bond the fabric to the inner supporting fiberglass epoxy resin matrix and to the intermediate fiberglass epoxy resin matrix, removing the intermediate fiberglass epoxy resin matrix to expose the fabric, and forming the fabric with an outer, outwardly convex, partially spherical surface, whereby to form an spherical bearing component.

One of the objects which the present invention seeks to attain is the provision of a composite spherical bearing which is self-aligning, non-metallic, corrosion resistant, light weight, maintenance fee, and self-lubricating.

Another object which the present invention seeks to attain is the provision of a bearing including engaged self-lubricating bearing surfaces including PTFE, polyester, or other bondable yarns.

Still another object which the present invention seeks to attain is the provision of a process for manufacturing an all composite self-aligning bearing.

Other features and advantages of the invention will become apparent to those skilled in the art upon review of the following detailed description, claims and drawings.
Figures 1 through 8 diagrammatically illustrate sequential steps in one embodiment of a method for fabricating a spherical bearing, which method and bearing embody various of the features of the invention.
Figure 9 is a perspective view of one embodiment of a self-aligning and self-lubricating spherical bearing embodying various of the features of the invention.

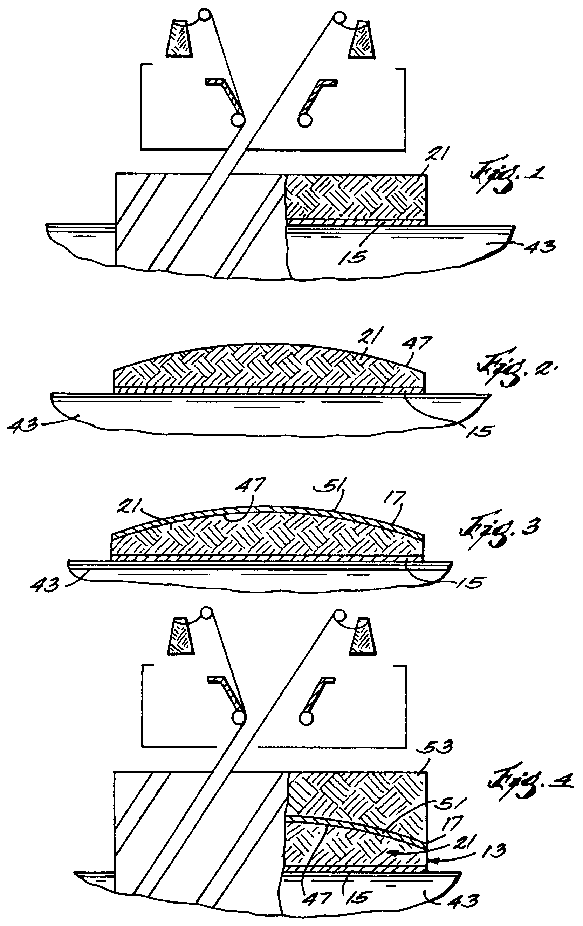

Illustrated in Figure 9 is one embodiment of a self-aligning and self-lubricating spherical bearing 11 including a one-piece, composite, laminated inner member 13 including (see Figures 1 and 8) an inner layer 15 which is fabricated of self-lubricating material and an outer layer 17 which is fabricated of self-lubricating material and which includes an outer bearing surface 19 of truncated, outwardly convex spherical shape. In addition, the inner member 13 includes an intermediate resinous supporting layer 21 bonded to and supporting the inner and outer layers 15 and 17 of the inner member 13.

The self-aligning and self-lubricating spherical bearing 11 also includes a one-piece, composite, laminated outer member 23 including an inner layer 25 which is fabricated of self-lubricating material, which includes an inner bearing surface 27 of truncated, inwardly concave spherical shape, and which is movably engaged with the outer bearing surface 19 of the outer layer 17 of the inner member 13, and an outer supporting layer 29 bonded to and supporting the inner layer 25 of the outer member 23.

While other constructions can be employed, in the construction shown in Figure 9, the inner layer 15 of the inner member 13 defines a cylindrical bore 33. In other arrangements the bore could be square or hexagonal in cross section or have some other non-cylindrical shape.

While other constructions can be employed, in the construction shown in Figures 8 and 9, the outer supporting layer 29 of the outer member 23 has an outer cylindrical surface 35.

While other constructions can be employed, in the construction shown in Figures 8 and 9, the inner layer 25 of the outer member 23 is bonded to the outer supporting layer 29, and the outer layer 17 and the inner layer 15 of the inner member 13 are bonded to the intermediate resinous supporting layer 21.

While other constructions can be employed, in the construction shown in Figures 8 and 9, the intermediate supporting layer 21 of the inner member 13 and the outer supporting layer 29 of the outer member 23 comprise a fiberglass epoxy resin matrix including

glass filaments and resin. While other constructions can be employed, in the construction shown in Figures 8 and 9, the inner and outer layers 15 and 17 of the inner member 13 and the inner layer 25 of the outer member 23 comprise a fabric including PTFE, polyester, or some other bondable yarns.

It is particularly noted that the spherical bearing 11 of the invention is not limited to the provision of an inner member 13 with an inner layer 15, and, more specifically, extends to a one-piece, laminated inner member 13 including a layer 17 which is fabricated of self-lubricating material and which includes an outer bearing surface 19 of truncated, outwardly convex spherical shape, and an inner resinous supporting layer 21 bonded to and supporting the self-lubricating layer 17 of the inner member 13, and a one-piece, laminated outer member 23 including an inner layer 25 which is fabricated of self-lubricating material, which includes an inner bearing surface 27 of truncated, inwardly concave spherical shape, and which is movably engaged with the self-lubricating layer 17 of the inner member 13, and an outer resinous supporting layer 29 bonded to and supporting the self-lubricating inner layer 25 of the outer member 23.

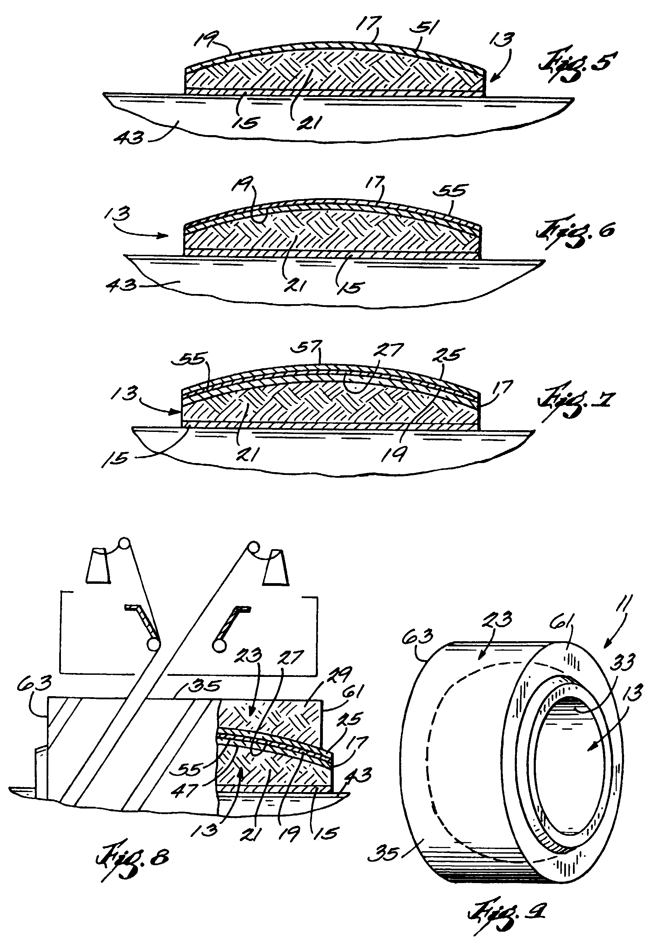

The spherical bearing 11 shown in Figure 9 can be fabricated, as shown in Figures 1 through 8, and in accordance with one embodiment of the invention, by a method including the steps of (see Figure 1) partially forming the first self-lubricating inner layer 15 by placing a first fabric 41 of self-lubricating material on a suitable mandrel 43 and then applying, by winding onto the fabric 41 on the mandrel 43, glass filaments and resin so as to conform the first fabric 41 to the mandrel 43, so as to fill with resin the interstices of the first fabric 41, thereby further forming the resinous self-lubricating inner layer 15, and so as to initiate formation of the intermediate resinous supporting layer 21.

While other arrangements can be employed, the intermediate supporting layer 21 of glass filaments and resin is preferably applied over the self-lubricating fabric 41 as disclosed in greater detail in U.S. Patent 3,616,000 which is incorporated herein by reference.

In addition, while other mandrels of other shapes can be employed, the mandrel 43 is preferably cylindrical.

Thereafter, the disclosed method includes the step of curing the applied resin 21 to complete formation of the intermediate supporting layer 21 as a fiberglass epoxy resin matrix, to complete formation of the inner self-lubricating layer 15, and to bond the inner self-lubricating layer 15, including the fabric 41 located on the mandrel 43, to the intermediate supporting layer 21. Any suitable curing arrangement can be employed.

Thereafter, as shown in Figure 2, the method further includes the step of, providing on the intermediate supporting layer 21, or forming the intermediate supporting layer 21 with, an outer, outwardly convex, truncated spherical surface 47. Any suitable arrangement, such as by machining or grinding, can be employed to provide the intermediate supporting layer 21 with the spherical surface 47.

Thereafter, the method includes the step of (see Figure 3) partially forming the second self-lubricating inner layer 17 by placing a second fabric 51 of self-lubricating material on the outer spherical surface 47 of the intermediate supporting layer 21.

Thereafter, the method includes the step of applying, on the second fabric 51, glass filaments and resin so as to conform the second fabric 51 to the outer spherical surface 47 of the intermediate supporting layer 21, so as to fill with resin the interstices of the second fabric 51, thereby further forming the resinous self-lubricating outer layer 17, and so as to initiate formation of a second resinous layer 53. While other arrangements can be employed, the second resinous layer 53 of glass filaments and resin is preferably applied over the second self-lubricating fabric 51 as disclosed in greater detail in U.S. Patent 3,616,000 which is incorporated herein by reference.

Thereafter, the method includes the step of curing the applied resin to complete formation of the second resinous layer 53 as a fiberglass epoxy resin matrix, to complete formation of the outer self-lubricating layer 17, and to bond the self-lubricating layer 17, including the second fabric 51, to the intermediate fiberglass and resin supporting layer 21 and to the second resinous layer 53 of fiberglass and resin. Any suitable curing arrangement can be employed.

Thereafter, as shown in Figure 5, the method includes the steps of removing the second layer 53 of cured fiberglass and resin to expose the second self-lubricating layer 17, and forming the second self-lubricating layer 17 with the outer, outwardly convex, spherical bearing surface 19, whereby to complete formation of the inner laminated bearing member 13. Any suitable arrangement, such as by machining or grinding, can be employed to remove the second layer 53 and to form the second self-lubricating layer 17 with the outer, outwardly convex, spherical bearing surface 19.

Thereafter, as shown in Figure 6, the method includes the step of applying a parting agent 55 (illustrated in great enlargement) to the outer spherical bearing surface 19 of the outer self-lubricating layer 17. Any suitable parting agent can be employed and applied in any suitable manner.

Thereafter, the method includes the steps of (see Figure 7) partially forming the third self-lubricating layer 25, i.e., the inner self lubricating layer 25 of the outer member 23, by placing a third fabric 57 of self-lubricating material over the parting agent 55 on the outer spherical bearing surface 19 of the second fabric 51 and then applying, on the third fabric 57, glass filaments and resin so as to conform the third fabric 57 to the outer spherical bearing surface 19 of the outer self-lubricating layer 17, so as to fill with resin the interstices of the third fabric 57, thereby further forming the resinous self-lubricating inner layer 25 of the second member 23, and so as to initiate formation of the outer resinous supporting layer 29. While other arrangements can be employed, the outer resinous supporting layer 29 of glass filaments and resin is preferably applied over the third self-lubricating fabric 57 as disclosed in greater detail in U.S. Patent 3,616,000 which is incorporated herein by reference.

The method further includes the step of curing the applied resin to complete formation of the outer supporting layer 29 as a fiberglass epoxy resin matrix, to complete formation of the inner self-lubricating layer 25, and to bond the inner self-lubricating layer 25, including the third fabric 57, to the outer supporting layer 29, whereby to complete formation of the outer laminated bearing member 23. Any suitable curing arrangement can be employed.

The method can also include the step of trimming the outer supporting layer 29 to provide two parallel side surfaces 61 and 63. Any suitable trimming arrangement can be employed.

Preferably, the disclosed method also includes, after the step of curing the resin of the outer supporting layer 29, the step of displacing or relatively moving the inner and outer members 13 and 23 relative to each other.

The invention is not limited to the above described steps of placing the first fabric 41 of self-lubricating material on the suitable mandrel 43; forming, on the first fabric 41, the supporting layer 21 of glass filaments and resin; curing the resin of the supporting layer 21 to complete formation of the intermediate supporting layer 21 of fiberglass epoxy resin matrix and to bond the first fabric 41 to the intermediate supporting layer 21; and providing or forming the intermediate supporting layer 21 with the outer, outwardly convex, truncated spherical surface 47.

In particular, one embodiment of the invention can commence with the step of providing the intermediate supporting layer 21 which is fabricated of fiberglass epoxy resin matrix and which includes the outer, outwardly convex, truncated spherical surface 47, followed by the step of placing the second fabric 51 of self-lubricating material on the outer spherical surface 47 of the intermediate supporting layer 21, and then followed by the subsequent steps outlined above.

In another broad aspect of the method of the invention, there is provided a method of making a spherical bearing component comprising the steps of providing an inner supporting layer which is fabricated of fiberglass epoxy resin matrix and which includes an outer, outwardly convex, truncated spherical surface, placing a fabric of self-lubricating material on the outer spherical surface of the inner supporting fiberglass epoxy resin matrix, applying on the fabric a second layer of glass filaments and resin so as to conform the fabric to the outer spherical surface of the inner supporting fiberglass epoxy resin matrix,, curing the second layer to form an intermediate fiberglass epoxy resin matrix and to bond the fabric to the inner supporting fiberglass epoxy resin matrix and to the intermediate fiberglass epoxy resin matrix, removing the intermediate fiberglass epoxy resin matrix to expose the fabric, and forming the fabric with an outer, outwardly convex, spherical surface, whereby to form an spherical bearing component.

In the disclosed method, the fabrics 41, 51, and 57 of self-lubricating material preferably comprises PTFE, polyester, or some other bondable yarns and the self-lubricating surfaces 19 and 27 directly bear on each other, providing acceptable wear life.

The disclosed spherical bearing 11 is non-metallic, corrosion resistant, light weight, maintenance free, and self lubricating.

The inner and outer members 13 and 23 of the disclosed spherical bearing 11 are permanently assembled to each other and cannot be separated from each other in the absence of mutilation of one or both of the members 13 and 23.

One of the advantages of the invention is the ability to vary or change the coefficient of expansion of the spherical bearing by changing winding angles of the fiberglass or glass filaments included in both the inner and the outer members. As is well known, providing such variability in the coefficient of expansion is not generally possible with metallic bearings. This advantage allows for different clearances in the resulting installation.

Another of the advantages of the invention is the ability to provide for high load (few cycles) and low load (many cycles) applications by changing or varying the woven fabric, depending upon the desired bearing life.

Another of the advantages of the invention is the corrosion resistance of the disclosed spherical bearing, which resistance permits usage in environments, such as fresh water and sea water, where, heretofore, expensive metals and/or lubrication were required.

Still another of the advantages of the invention is in applications or installations where weight is a factor and it is desirable to minimize such weight. More particularly, the lesser weight of the disclosed spherical bearing (as compared to metallic bearings) permits usage in such applications as aerospace, space craft and space stations.

Various of the features of the invention are set forth in the following claims.

## Claims

1. A spherical bearing characterised in that it comprises a one-piece, laminated inner member (13) including a layer (17) which is fabricated of self-lubricating material and which includes an outer bearing surface (19) of truncated, outwardly convex spherical shape, and an inner resinous layer (21) bonded to and supporting said self-lubricating layer (17) of said inner member, and a one-piece, laminated outer member (23) including a layer (25) which is fabricated of self-lubricating material, which includes an inner bearing surface (27) of truncated, inwardly concave spherical shape, and which is movably engaged with said outer bearing surface (19) of said self-lubricating layer (17) of said inner member (13), and an outer resinous layer (29) bonded to and supporting said self-lubricating layer (25) of said outer member.

2. A spherical bearing characterised in that it comprises a one-piece, laminated inner member (13) including an inner layer (15) which is fabricated of self-lubricating material, an outer layer (17) which is fabricated of self-lubricating material and which has an outer bearing surface (19) of truncated, outwardly convex spherical shape, and an intermediate resinous layer (21) bonded to and supporting said inner and outer layers of said inner member, and a one-piece, laminated outer member (23) including an inner layer (25) which is fabricated of self-lubricating material, which has an inner bearing surface (27) of truncated, inwardly concave spherical shape, and which is movably engaged with said outer bearing surface (19) of said outer layer (17) of said inner member, and an outer supporting layer (29) bonded to and supporting said inner layer of said outer member.

3. A spherical bearing in accordance with Claim 2 characterised in that said outer layer (17) and said inner layer (15) of said inner member (13) are bonded to said intermediate layer (21).

4. A spherical bearing in accordance with Claim 2 or Claim 3, characterised in that said intermediate layer (21) and said outer layer (17) comprise a fibreglass epoxy resin matrix including glass filaments and resin.

5. A spherical bearing in accordance with Claim 2, Claim 3 or Claim 4, characterised in that said inner and outer layers (15,17) of said inner member (13) and said inner layer (25) of said outer member (23) comprise a fabric including PTFE, polyester, or other bondable yarns.

6. A spherical bearing in accordance with any one of the preceding Claims characterised in that said inner layer (15,21) of said inner member defines a square, hexagonal or other non-cylindrical bore.

7. A spherical bearing in accordance with any one of the preceding Claims characterised in that said inner layer (15,21) of said inner member defines a cylindrical bore.

8. A spherical bearing in accordance with any one of the preceding Claims, characterised in that said inner layer (25) of said outer member (23) is bonded to said outer layer (29).

9. A spherical bearing characterised in that it comprises a one-piece, laminated inner member (13) including an inner layer (15) which is fabricated from a self-lubricating fabric of PTFE yarns, polyester yarns or other bondable yarns and which defines a bore, an outer layer (17) which is fabricated from a fabric of PTFE yarns, polyester yarns or other bondable yarns and which has a truncated, outwardly convex spherical shape, and an intermediate resinous layer (21) which is fabricated of glass filaments and resin and which is bonded to and supports said inner and outer layers (15,17), and a one-piece, laminated outer member (23) including an inner layer (25) which is fabricated from a self-lubricating fabric including PTFE yarns, polyester yams or other bondable yarns and which has a truncated, inwardly concave spherical shape and movably engages said outer layer (17) of said inner member, and an outer supporting layer (29) which is fabricated of glass filaments and resin, which is bonded to said inner layer of said outer member, and which has an outer cylindrical surface (35).

10. A method of making a spherical bearing characterised in that it comprises the steps of providing an inner supporting layer (15) which is fabricated of fibreglass epoxy resin matrix and which includes an outer, outwardly convex, truncated spherical surface, placing a first fabric (25) of self-lubricating material on the outer spherical surface (27) of the inner supporting fibreglass epoxy resin matrix, applying on the first fabric (25) a second layer (29) of glass filaments and resin so as to conform the first fabric (25) to the outer spherical surface (27) of the inner supporting fibreglass epoxy resin matrix, curing the second layer to form an intermediate fibreglass epoxy resin matrix and to bond the first fabric (25) to the inner supporting fibreglass epoxy resin matrix (21) and to the intermediate fibreglass epoxy resin matrix, removing the intermediate fibreglass epoxy resin matrix (53) to expose the first fabric, forming the first fabric with an outer, outwardly convex, spherical surface, whereby to form an inner laminated bearing member, placing a second fabric of self-lubricating material on the outer spherical surface of the first fabric, applying on the second fabric an outer layer of glass filament and resin so as to conform the second fabric to the outer spherical surface of the first fabric, and curing the outer layer to form an outer supporting fibreglass epoxy resin matrix and to bond the second fabric to the outer supporting fibreglass epoxy resin matrix, whereby to form an outer laminated bearing member.

11. A method in accordance with Claim 11 characterised in that it includes the further step of applying a parting agent to the outer spherical surface of the first fabric prior to placing the second fabric on the first fabric.

12. A method in accordance with Claim 10 or Claim 11, characterised in that the step of providing an inner supporting fibreglass epoxy resin matrix which includes an outer, outwardly convex, truncated spherical surface includes the steps of placing a fabric of PTFE, polyester, or other bondable yarns on a mandrel, applying on the fabric on the mandrel a layer of glass filaments and resin, curing the resin of the last mentioned layer to form the inner supporting fibreglass epoxy resin matrix and to bond the fabric on the mandrel to the inner fibreglass epoxy resin matrix, and forming the inner supporting fibreglass epoxy resin matrix with the outer, outwardly convex, truncated spherical surface.

13. A method of making a spherical bearing characterised in that it comprises the steps of placing a first fabric of PTFE, polyester, or other bondable yarns on a cylindrical mandrel, applying on the first fabric a first supporting layer of glass filaments and resin, curing the resin of the first supporting layer to form an inner fibreglass epoxy resin matrix and to bond the first fabric to the inner fibreglass epoxy resin matrix, removing a portion of the first supporting layer to provide an outer, outwardly convex, truncated spherical surface, placing a second fabric of PTFE, polyester, or other bondable yarns on the outer, truncated spherical surface of the first supporting layer, applying on the second fabric a second layer of glass filaments and resin so as to conform the second fabric to the outer spherical surface of the first supporting layer, curing the resin of the second layer to form an intermediate fibreglass epoxy resin matrix and to bond the second fabric to the inner fibreglass epoxy resin matrix and to the intermediate fibreglass epoxy resin matrix, removing the intermediate fibreglass epoxy resin matrix to expose the second fabric, forming the second fabric with an outer, outwardly convex, truncated spherical surface, thereby to form an inner laminated member, applying a parting agent to the outer, truncated spherical surface of the second fabric, placing a third fabric of PTFE, polyester, or other bondable yarns over the parting agent and over the outer, truncated spherical surface of the second fabric, applying on the third fabric an outer layer of glass filaments and resin so as to conform the third fabric to the outer spherical surface of the second fabric, curing the resin of the outer layer to form an outer supporting fibreglass epoxy resin matrix and to bond the third fabric to the outer supporting fibreglass epoxy resin matrix, thereby to form an outer laminated member in encircling relation to the inner laminated member, and moving the outer member relative to the inner member.

14. A method in accordance with any one of Claims 10 to 13, characterised in that the mandrel is cylindrical.

15. A method in accordance with Claim 10 characterised in that the self-lubricating material comprises PTFE, polyester, or other bondable yarns.

16. A method in accordance with Claim 12 characterised in that the mandrel is a square, hexagonal or other non-cylindrical shape.

17. A method of making a spherical bearing component characterised in that it comprises the steps of providing an inner supporting layer which is fabricated of fibreglass epoxy resin matrix and which includes an outer, outwardly convex, partially spherical surface, placing a fabric of self-lubricating material on the outer partially spherical surface of the inner supporting fibreglass epoxy resin matrix, applying on the fabric a second layer of glass filaments and resin so as to conform the fabric to the outer spherical surface of the inner supporting fibreglass epoxy resin matrix, curing the second layer to form an intermediate fibreglass epoxy resin matrix and to bond the fabric to the inner supporting fibreglass epoxy resin matrix and to the intermediate fibreglass epoxy resin matrix, removing the intermediate fibreglass epoxy resin matrix to expose the fabric, and forming the fabric with an outer, outwardly convex, partially spherical surface, whereby to form a spherical bearing component.
